(19)

Europäisches
Patentamt
European
Patent Office
Office européen
des brevets

(11) **EP 3 451 518 A1**

(12) **EUROPEAN PATENT APPLICATION**

(43) Date of publication:
06.03.2019 Bulletin 2019/10

(51) Int Cl.:
*H02M 3/335* (2006.01)  *H01F 3/14* (2006.01)
*H02M 1/00* (2006.01)  *H02M 7/48* (2007.01)

(21) Application number: 18156160.6

(22) Date of filing: 09.02.2018

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: 28.08.2017  JP 2017163271

(71) Applicant: **OMRON CORPORATION**
**Kyoto-shi, Kyoto 600-8530 (JP)**

(72) Inventors:
• **TANINO, Kohei**
**Kyoto-shi, Kyoto 600-8530 (JP)**

• **NAGAOKA, Shingo**
**Kyoto-shi, Kyoto 600-8530 (JP)**
• **SATO, Mitsuru**
**Kyoto-shi, Kyoto 600-8530 (JP)**
• **NAGANO, Masaaki**
**Kyoto-shi, Kyoto 600-8530 (JP)**
• **ONISHI, Hiroyuki**
**Kyoto-shi, Kyoto 600-8530 (JP)**

(74) Representative: **Emde, Eric**
**Wagner & Geyer**
**Gewürzmühlstrasse 5**
**80538 München (DE)**

(54) **LLC RESONANT CONVERTER**

(57)     Provided is an LLC resonant converter (10) capable of achieving high efficiency while preventing saturation of a transformer (2). The LLC resonant converter (10) includes semiconductor switches (Q1, Q2) connected in series between a positive electrode and a negative electrode of a power source (1), a transformer (2) including a primary winding (2P), a core (20), and a secondary winding (2S), a capacitor (CI) connected between the negative electrode of the power source (1) and a second end of the primary winding (2P) of the transformer (2), a capacitor (C2), and semiconductor switches (Q3, Q4) connected to each other in series and in parallel with the capacitor (C1), and a secondary side circuit (3) connected to the secondary winding (2S) of the transformer (2), wherein the transformer (2) is a swing choke coil.

FIG. 1A

FIG. 1B

Description

BACKGROUND

Technical Field

The present disclosure relates to an LLC resonant converter.

Description of Related Art

An LLC resonant converter is a type of DC-DC converter using resonance due to two inductances L and one capacitance C. Techniques for changing a resonance frequency by varying a capacitance of the LLC resonant converter have been proposed so far. For example, Published Japanese Translation No. 2009-514495 of PCT International Publication (Patent Document 1) discloses a power converter including a capacitor circuit connected in series to an inductor and a switch for changing a capacitance value of the capacitor circuit. The capacitor circuit has two capacitors connected in parallel to the inductor. The switch is connected in series to one of the two capacitors. For example, Japanese Unexamined Patent Publication Application No. 2014-3764 (Patent Document 2) discloses a power conversion device having a switch for short-circuiting both ends of a capacitor.

[Patent Document 1] Published Japanese Translation No. 2009-514495 of PCT International Publication
[Patent Document 2] Japanese Laid-open No. 2014-3764

SUMMARY

When an excitation inductance of a transformer is large, saturation of the transformer is likely to occur after a capacitance of a resonant circuit is switched. When the saturation of the transformer occurs, an LLC resonant converter cannot be normally controlled, and an output voltage cannot be output to a secondary side. To prevent the saturation of the transformer, it is conceivable to use a transformer with a small excitation inductance relative to the LLC resonant converter. However, when the excitation inductance of the transformer is small, there is a problem in that efficiency of the LLC resonant converter decreases when the capacitance of the resonant circuit is switched to a small value.

An object of the present disclosure is to provide an LLC resonant converter capable of achieving high efficiency while preventing saturation of a transformer.

An LLC resonant converter according to one aspect of the present disclosure includes a first switch and a second switch connected in series between a positive electrode and a negative electrode of a power source, a transformer including a primary winding having a first end connected to the first switch and the second switch, a core, and a secondary winding, a first capacitor connected between the negative electrode of the power source and a second end of the primary winding of the transformer, a second capacitor and a capacitance switch connected to each other in series and in parallel with the first capacitor, and a secondary side circuit connected to the secondary winding of the transformer, wherein the transformer is a swing choke coil.

Preferably, a gap may be provided in the core, and at least one of a pair of opposing magnetic legs with the gap provided therebetween may have a cross-sectional area which continuously varies.

Preferably, a gap may be provided in the core, and at least one of a pair of opposing magnetic legs with the gap provided therebetween may have a cross-sectional area which varies stepwise.

Preferably, ON and OFF of the capacitance switch may be determined on the basis of an input voltage of the LLC resonant converter or a terminal voltage of a control circuit controlling a third switch and a fourth switch.

According to the present disclosure, it is possible to provide an LLC resonant converter which is capable of achieving high efficiency while preventing saturation of a transformer.

BRIEF DESCRIPTION OF THE DRAWINGS

FIGS. 1A and 1B are circuit diagrams of an LLC resonant converter according to one embodiment of the present disclosure.
FIG. 2 is a diagram illustrating an example of a frequency versus gain characteristic of the LLC resonant converter illustrated in FIGS. 1A and 1B.
FIG. 3 is a diagram illustrating a problem which occurs due to switching a capacitance of a resonant circuit when an excitation inductance of a transformer is large.
FIG. 4 is diagram illustrating a problem which occurs due to switching the capacitance of the resonant circuit when the excitation inductance of the transformer is small.
FIG. 5 is a diagram illustrating an example of a frequency versus output voltage characteristic of a general LLC resonant converter.
FIG. 6 is a diagram schematically illustrating an input voltage versus primary side current characteristic and an input voltage versus frequency characteristic in the general LLC resonant converter.
FIGS. 7A, 7B, 7C and 7D are diagrams illustrating a relationship between a shape of a core of a transformer used for the general LLC resonant converter and characteristics of the LLC resonant converter.
FIG. 8 is a schematic diagram illustrating an operation principle of a swing choke coil used in the LLC resonant converter according to the embodiment of the present disclosure.

FIG. 9 is a diagram illustrating an example of characteristics of the swing choke coil illustrated in FIG. 8.

FIG. 10 is a gain curve illustrating characteristics of the LLC resonant converter according to the embodiment of the present disclosure.

FIG. 11 is a diagram illustrating a temporal change in an excitation current.

FIGS. 12A, 12B, 12C and 12D are diagrams illustrating a relationship between a shape of a core of a transformer and the characteristics of the LLC resonant converter.

FIGS. 13A, 13B, 13C and 13D are diagrams illustrating an example of a shape of a core applied to the embodiment of the present disclosure.

FIG. 14 is a diagram schematically illustrating a primary winding and a secondary winding wound around the core.

FIG. 15 is a diagram illustrating a relationship between a resonance frequency and an operation frequency.

## DESCRIPTION OF THE EMBODIMENTS

Embodiments of the present disclosure will be described in detail with reference to the drawings. Also, in the drawings, the same or corresponding parts will be designated by the same reference numerals, and the description thereof will not be repeated.

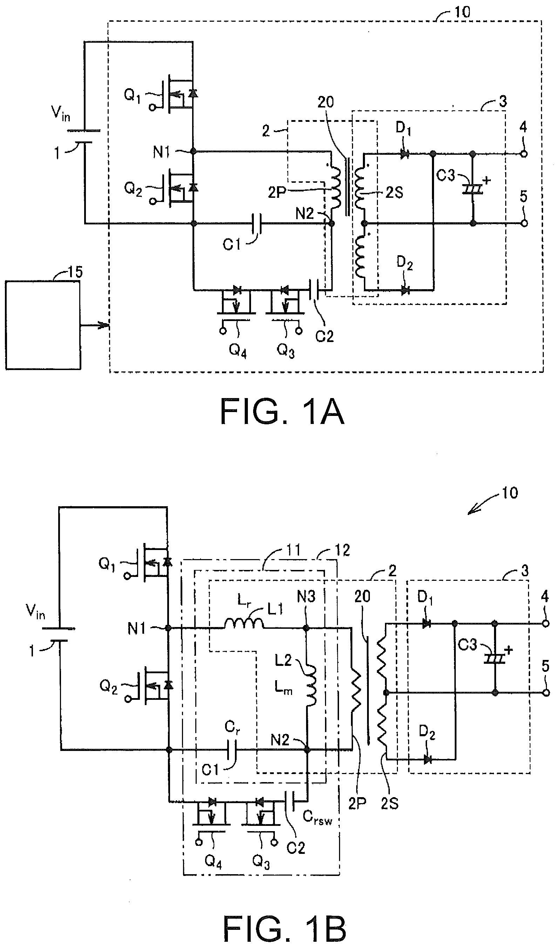

FIGS. 1A and 1B are circuit diagrams of an LLC resonant converter according to one embodiment of the present disclosure. FIG. 1A is a circuit diagram illustrating a configuration of the LLC resonant converter, and FIG. 1B is an equivalent circuit diagram illustrating a transformer illustrated in FIG. 1A by an equivalent circuit. An LLC resonant converter 10 includes, for example, semiconductor switches Q1, Q2, Q3, and Q4, which are metal oxide semiconductor field effect transistors (MOSFETs), a transformer 2, capacitors C1 and C2, a secondary side circuit 3, and output terminals 4 and 5. As illustrated in FIG. 1B, a primary winding 2P of the transformer 2 is equivalently expressed by an inductor L1 having a leakage inductance Lr, an inductor L2 having an excitation inductance $L_m$, and a resistor. The inductor L1 may be separately prepared outside the transformer.

In FIG. 1B, the inductor L1 is indicated as an inductor connected between a connection point N1 and a connection point N3, and the inductor L2 is indicated as an inductor connected between a connection point N2 and the connection point N3. A resistance component is connected in parallel with the inductor L2 between the connection point N2 and the connection point N3.

The semiconductor switches Q1 and Q2 are connected in series between a positive electrode and a negative electrode of a power source 1 to form a half bridge circuit. The power source 1 is a DC power source which outputs a DC voltage $V_{in}$.

The transformer 2 has the primary winding 2P, a secondary winding 2S, and a core 20. A first end of the primary winding 2P is connected to the connection point N1, which is a connection point between the semiconductor switch Q1 and the semiconductor switch Q2. A second end of the primary winding 2P is connected to the connection point N2.

The capacitor C1 has a capacitance $C_r$ and is connected between the second end of the primary winding 2P of the transformer 2 and the negative electrode of the power source 1. That is, the capacitor C1 is connected between the connection point N2 and the negative electrode of the power source 1.

The capacitor C2 has a capacitance $C_{rsw}$. The capacitor C2, the semiconductor switch Q3, and the semiconductor switch Q4 are connected in series between the connection point N2 and the negative electrode of the power source 1, and in parallel with the capacitor C1. In the configuration illustrated in FIGS. 1A and 1B, a first end of the capacitor C2 is connected in parallel with the capacitor C1 to the second end of the primary winding 2P of the transformer 2. The semiconductor switch Q3 and the semiconductor switch Q4, which are capacitance switches, are connected in series between a second end of the capacitor C2 and the negative electrode of the power source 1. However, the capacitor C2 and the semiconductor switches Q3 and Q4 are not limited to being connected in the above-described order.

The secondary side circuit 3 is connected to the secondary winding 2S of the transformer 2. The secondary side circuit 3 includes diodes D1 and D2 and a capacitor C3. The capacitor C3 is, for example, an electrolytic capacitor.

In the LLC resonant converter 10, a resonant circuit is configured with the leakage inductance $L_r$, the excitation inductance $L_m$ and a capacitance. The capacitance of the resonant circuit is changed by turning on and off the semiconductor switches Q3 and Q4. Therefore, the resonance frequency changes. Specifically, when the semiconductor switches Q3 and Q4 are turned off, the resonant circuit 11 is configured with the leakage inductance $L_r$, the excitation inductance $L_m$, and the capacitance $C_r$. On the other hand, when the semiconductor switches Q3 and Q4 are turned on, the resonant circuit 11 is configured with the leakage inductance $L_r$, the excitation inductance $L_m$, and a capacitance ($C_r + C_{rsw}$). The turning on and off of the semiconductor switches Q3 and Q4 are controlled by a control signal from, for example, a control IC 15 (however, the present disclosure is not limited to the control IC 15). Further, The turning on and off of the semiconductor switches Q3 and Q4 are determined from a result of sensing an input voltage or each terminal voltage of the control IC 15 or the like. When the input voltage is low, the semiconductor switches Q3 and Q4 are turned on.

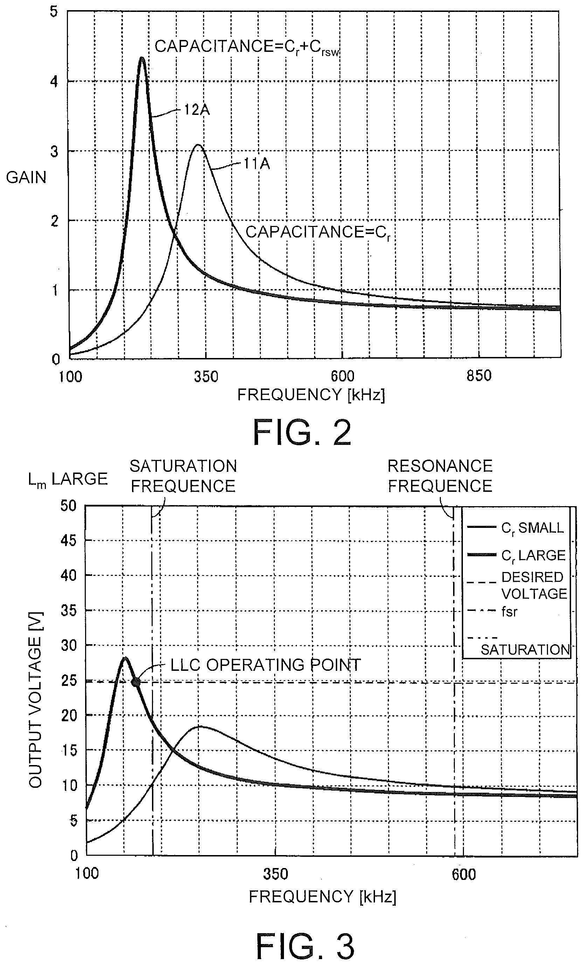

FIG. 2 is a diagram illustrating an example of a frequency versus gain characteristic of the LLC resonant converter 10 illustrated in FIGS. 1A and 1B. Referring to FIGS. 1A, 1B and 2, a curve 11A is a gain curve of the LLC resonant converter 10 due to the resonant circuit 11 (capacitance=$C_r$), and a curve 12A is a gain curve of the LLC resonant converter 10 due to the resonant circuit 12 (capacitance=($C_r$+$C_{rsw}$)). The gain can be increased by switching the capacitance of the resonant circuit from $C_r$ to $C_r$+$C_{rsw}$. Accordingly, it is possible to ensure a desired output voltage even when the input voltage ($V_{in}$) decreases. Also, since a design requirement in consideration of the low input voltage is relaxed, it is possible to ensure high efficiency during a normal operation.

Further, according to the configuration illustrated in FIGS. 1A and 1B, since a high gain is obtained, an input capacitor (not illustrated in FIGS. 1A and 1B) can be miniaturized. In a DC-DC converter, a minimum value $C_{inmin}$ of a capacitance $C_{in}$ of an input capacitor required to satisfy a power source holding time t(ms) may be expressed by the following equation.

[Equation 1]

$$C_{inmin} = \frac{2P}{V_{c\_start}^2 - V_{in\_min}^2} \times t \times 10^{-3}$$

In the above Equation, P is the maximum output power of the DC-DC converter, $V_{c\_start}$ is a charging voltage of the input capacitor when the power supply is stopped, $V_{in\_min}$ is a minimum input voltage at which the DC-DC converter can operate. Since the capacitance $C_{in}$ can be made smaller as the gain is increased, the input capacitor can be miniaturized.

Further, the core and the winding forming the transformer can be miniaturized by increasing a switching frequency. A maximum magnetic flux density ΔB of the transformer can be expressed by the following equation. $V_{tr}$ is a (primary or secondary) voltage applied to the transformer, $f_{sw}$ is a frequency of the voltage applied to the transformer, N is the number of primary or secondary windings, and $A_e$ is an effective cross-sectional area of the core.

[Equation 2]

$$\Delta B = \frac{V_{tr}}{4Nf_{sw}A_e}$$

To reduce the maximum magnetic flux density ΔB, the following methods can be considered.

   i) Increase the number of windings N.
   ii) Increase the effective cross-sectional area Ae of the core.
   iii) Increase the frequency $f_{sw}$.

However, when the number of windings N is increased or the effective cross-sectional area Ae of the core is increased, a size of the transformer increases. In this regard, by increasing the frequency $f_{sw}$, the maximum magnetic flux density ΔB can be reduced without changing a volume of the core and the number of windings. Therefore, it is possible to downsize the core and the winding forming the transformer by increasing the switching frequency.

When the resonance frequency in the LLC resonant converter is switched, the following problems may occur. FIG. 3 is a diagram illustrating a problem which occurs due to switching the capacitance of the resonant circuit when the excitation inductance $L_m$ of the transformer is large. Referring to FIG. 3, a "saturation frequency" corresponds to a switching frequency of the LLC resonant converter when the transformer 2 is saturated. An operating point of the LLC resonant converter for obtaining a desired output voltage is determined on the basis of a gain curve.

According to the gain curve illustrated in FIG. 3, it is necessary to increase the capacitance of the resonant circuit (i.e., to switch the capacitance from $C_r$ to $C_r$+$C_{rsw}$) to obtain the desired output voltage. However, the switching frequency of the operating point is smaller than the saturation frequency. That is, the transformer is saturated when the capacitance of the resonant circuit is increased to obtain the desired output voltage. Accordingly, the LLC resonant converter may not operate.

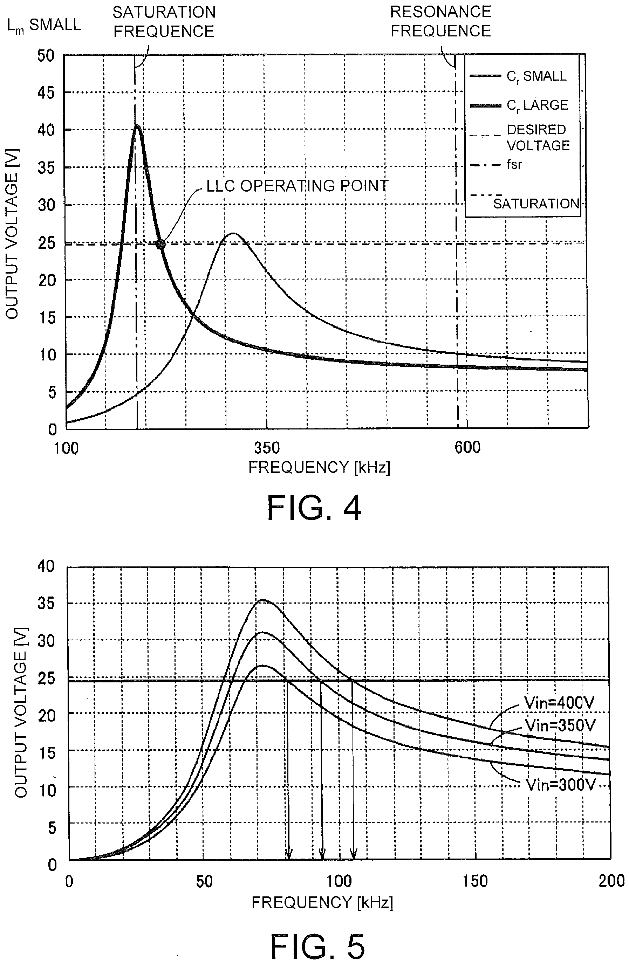

FIG. 4 is diagram illustrating a problem which occurs due to switching the capacitance of the resonant circuit when the excitation inductance $L_m$ of the transformer is small. Referring to FIG. 4, even if the capacitance of the resonant circuit is increased to obtain a desired output voltage, the switching frequency of the operating point is larger than the saturation frequency. Therefore, the saturation of the transformer can be prevented. However, since the excitation inductance $L_m$ is small, a large current flows through the LLC resonant converter. Accordingly, a problem in that efficiency of the LLC resonant converter is deteriorated occurs when the capacitance of the resonant circuit is a small value ($C_r$).

This point will be explained in more detail. FIG. 5 is a diagram illustrating an example of a frequency versus output voltage characteristic of a general LLC resonant converter. As illustrated in FIG. 5, when an output voltage is constant, a frequency decreases as the input voltage $V_{in}$ of the LLC resonant converter decreases.

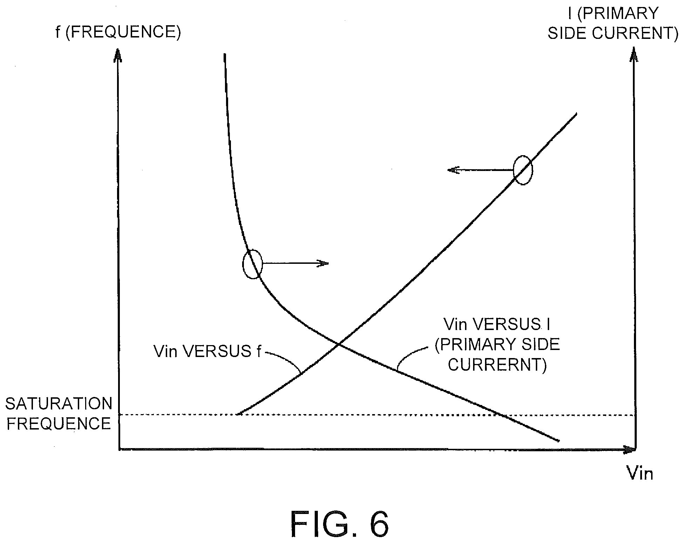

FIG. 6 is a diagram schematically illustrating an input voltage $V_{in}$ versus primary side current I characteristic and an input voltage $V_{in}$ versus frequency f characteristic in the general LLC resonant converter. As illustrated in FIG. 6, in the case in which an output voltage and a primary inductance of the LLC resonant converter are constant, when the input voltage $V_{in}$ decreases and a frequency f decreases, a primary side current I increases. When the frequency f reaches the saturation frequency, the excitation inductance becomes substantially 0, and thus the primary side current I is a maximum value.

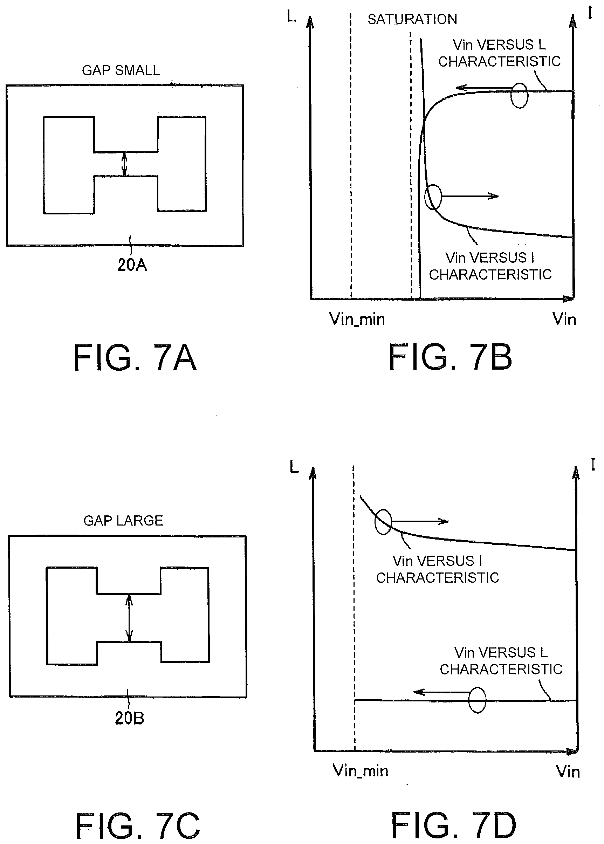

FIGS. 7A, 7B, 7C and 7D are diagrams illustrating a relationship between a shape of a core of a transformer used for the general LLC resonant converter and the characteristics of the LLC resonant converter. Further, the core of the transformer illustrated in FIGS. 7A, 7B, 7C and 7D can be realized by an E type core and an I type core. FIG. 7A illustrates a core 20A having a small and constant gap width. FIG. 7B illustrates characteristics of an LLC resonant converter using a transformer 2 including the core 20A. Referring to FIGS. 7A and 7B, in the case in which a conventional core having a small gap width is used for the transformer 2, when the input voltage $V_{in}$ decreases, the transformer 2 is saturated, and thus a primary side current sharply increases.

FIG. 7C illustrates a core 20B having a large and constant gap width. FIG. 7D illustrates characteristics of an LLC resonant converter using a transformer 2 including the core 20B. Referring to FIGS. 7C and 7D, it is possible to prevent the transformer 2 from being saturated even when the input voltage $V_{in}$ is the minimum voltage $V_{in\_min}$ by using the core having a large gap width. However, since the excitation inductance is small, a primary side current at a steady state is large. This increases loss.

According to the embodiment of the present disclosure, a swing choke coil is adopted as the transformer 2 of the LLC resonant converter 10. Accordingly, it is possible to increase efficiency of the LLC resonant converter 10 in addition to preventing saturation of the transformer. This point will be described in detail below.

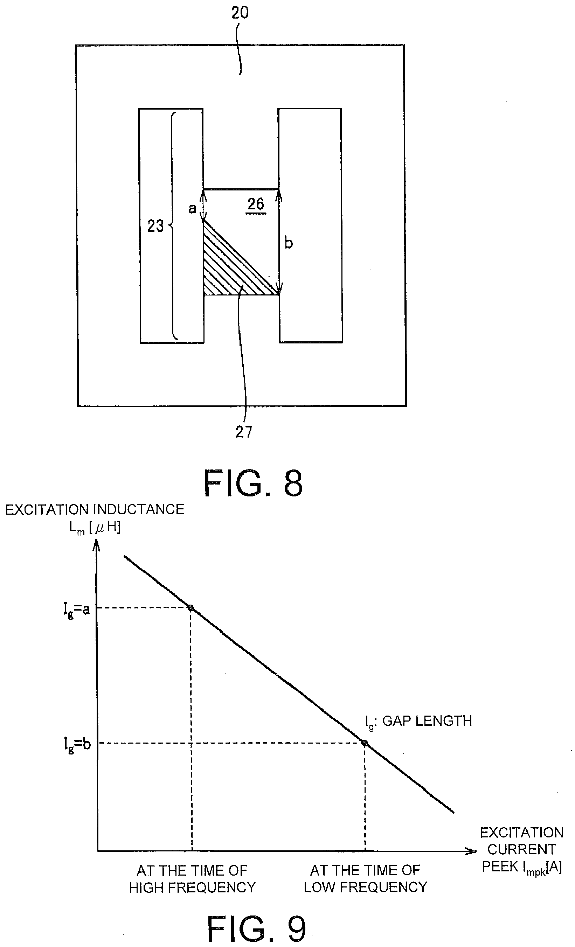

FIG. 8 is a schematic diagram illustrating an operation principle of the swing choke coil used in the LLC resonant converter 10 according to the embodiment of the present disclosure. For understanding of the disclosure, FIG. 8 illustrates a core of the swing choke coil in an easy-to-understand manner. Furthermore, illustrations of a primary winding and a secondary winding is omitted.

A gap 26 is provided in the core 20. In the configuration illustrated in FIG. 8, a length of the gap 26 continuously varies from a to b (a<b).

FIG. 9 is a diagram illustrating an example of characteristics of the swing choke coil illustrated in FIG. 8. Referring to FIG. 9, a part of the core 20 is saturated by a current flowing through the primary winding (not illustrated in FIG. 8), and the excitation inductance $L_m$ changes. One of opposing magnetic legs 23 with the gap 26 provided therebetween (refer to FIG. 8) forms a saturable portion 27.

A peak $I_{mpk}$ of an excitation current is expressed by the following equation. $f_{sw}$ is the switching frequency.

[Equation 3]

$$I_{mpk} = \frac{V}{4 L_m f_{sw}}$$

When the switching frequency $f_{sw}$ is high, the maximum current of the transformer (swing choke coil) on a primary side decreases. In this case, a gap length is $l_g$=a and the excitation inductance $L_m$ becomes large. On the other hand, when the switching frequency $f_{sw}$ is low, the maximum current on the primary side increases. In this case, the gap length is $l_g$=b and the excitation inductance $L_m$ becomes small.

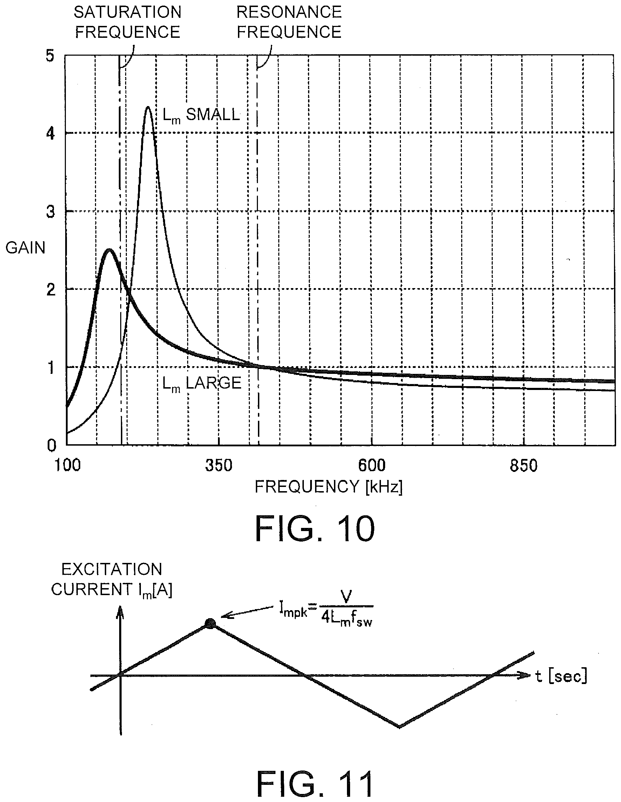

FIG. 10 is a gain curve illustrating the characteristics of the LLC resonant converter 10 according to the embodiment of the present disclosure. FIG. 11 is a diagram illustrating a temporal change in the excitation current. Referring to FIGS. 10 and 11, the capacitance of the resonant circuit is switched to $C_r+C_{rsw}$. The excitation current $I_m$ increases due to a decrease in the switching frequency $f_{sw}$. In this case, due to saturation of the swing choke coil, the excitation inductance $L_m$ decreases.

As the excitation inductance $L_m$ decreases, the switching frequency $f_{sw}$ of the operating point of the LLC resonant converter 10 exceeds the saturation frequency. Therefore, it is possible to prevent the LLC resonant converter 10 from being unable to be normally controlled when the capacitance of the resonant circuit is increased. On the other hand, it is possible to achieve a high efficiency operation during a rated operation when the capacitance of the resonant circuit is reduced. In addition, it is possible to widen a range of the input voltage $V_{in}$.

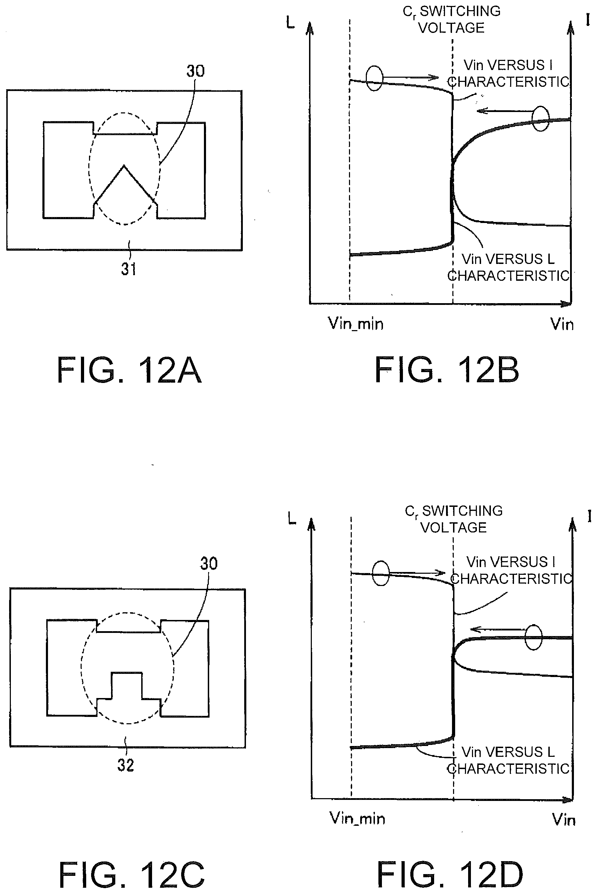

FIGS. 12A, 12B, 12C and 12D are diagrams illustrating a relationship between a shape of a core of a transformer and characteristics of an LLC resonant converter. FIG. 12A illustrates a core 31 according to an example. FIG. 12B illustrates characteristics of an LLC resonant converter using a transformer 2 including the core 31. Referring to FIGS. 12A and 12B, in the core 31, a central pair of magnetic legs 30 face each other with a gap provided therebetween. One of the magnetic legs 30 has a cross-sectional area which gradually varies. Therefore, the magnetic leg 30 is gradually saturated from a portion thereof having a small cross-sectional area. As the frequency F decreases, the core is gradually saturated, and thus the excitation inductance is changed. In an input voltage ($C_r$ switching voltage), an excitation inductance L is largely changed when the capacitance $C_r$ is changed. According to such a configuration, the excitation inductance L decreases according to a decrease of the input voltage $V_{in}$. Therefore, the primary side current can be suppressed at any input voltage. However, since a part of the core is always saturated even before the switching of the capacitance $C_r$, the core and the peripheral windings may be heated due to local heat generation of the core.

FIG. 12C illustrates a core 32 according to another example. FIG. 12D illustrates characteristics of an LLC resonant converter using a transformer 2 including the core 32. Referring to FIGS. 12C and 12D, in the case of the core 32, one of the pair of magnetic legs 30 has a cross-sectional area which varies stepwise. At the $C_r$

switching voltage, a portion of the magnetic leg 30 having a small cross-sectional area is saturated. The excitation inductance L decreases only when a value of the capacitance is switched. According to such a configuration, the excitation inductance L is hardly changed during normal operation of the LLC resonant converter. Therefore, it is possible to stabilize the frequency of the LLC resonant converter to a constant value. Further, since the core is not saturated before the capacitance $C_r$ is switched, it is considered that local heat generation of the core can be suppressed.

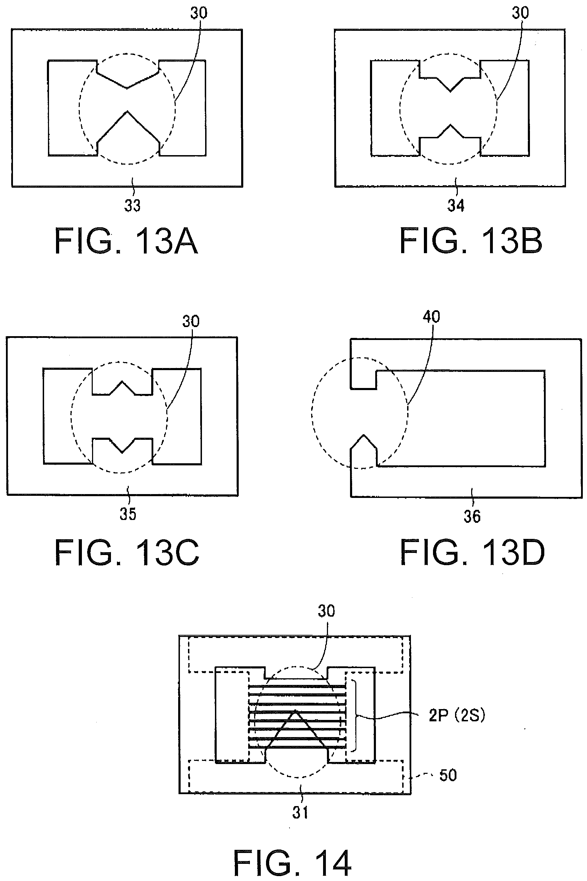

The shape of the core is not limited to the examples illustrated in FIGS. 12A and 12C, and various shapes can be adopted. FIGS. 13A, 13B, 13C and 13D are diagrams illustrating an example of the shape of the core applied to the embodiment of the present disclosure. In any of the shapes illustrated in FIGS. 13A to 13D, at least one of a pair of opposing magnetic with a gap provided therebetween has a cross-sectional area which gradually changes. Therefore, as illustrated in FIG. 12B, the excitation inductance L may be gradually changed according to the input voltage $V_{in}$ and the excitation inductance L may be largely changed at the $C_r$ switching voltage.

For example, like a core 34 illustrated in FIG. 13B, both of the pair of magnetic legs 30 may have a convex portion. Alternatively, like a core 35 illustrated in FIG. 13C, both of the pair of magnetic legs 30 may have a concave portion. Although not illustrated, only one of the pair of magnetic legs 30 may have the convex portion or the concave portion.

Further, like a core 36 illustrated in FIG. 13D, a U-shaped core may be adopted. One of a pair of magnetic legs 40 of the U-shaped core has a cross-sectional area which gradually changes. A shape of the magnetic leg 40 is similar to, for example, the shape of the magnetic leg 30 illustrated in FIG. 12A, but is not limited thereto, and other shapes may be adopted.

In the drawings described above, illustrations of the primary winding and the secondary winding are omitted for explaining the shape of the core. FIG. 14 is a diagram schematically illustrating a primary winding and a secondary winding wound around the core. As illustrated in FIG. 14, in the case of an E type core, both the primary winding 2P and the secondary winding 2S are wound around a middle leg (the magnetic leg 30) via a bobbin 50. Although not illustrated, in the case of the U-shaped core (for example, refer to FIG. 13D), a place on which the primary winding and the secondary winding are wound is not particularly limited.

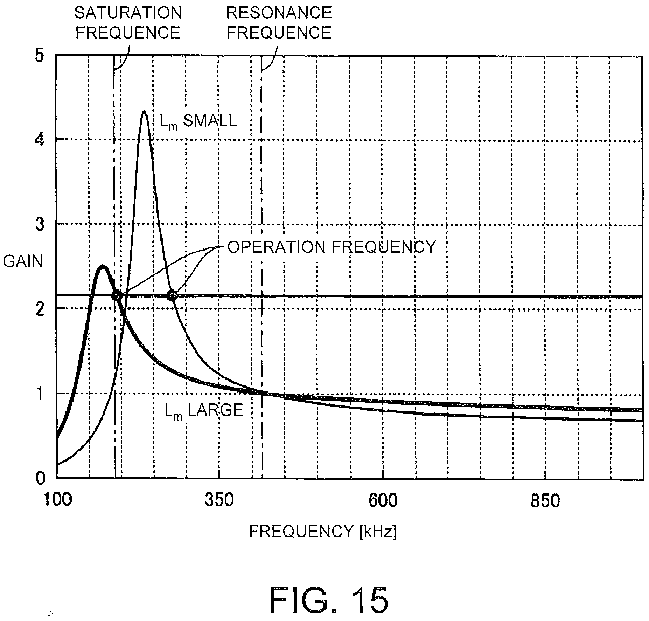

According to the embodiment of the present disclosure, a highly efficient operation can also be achieved due to the following points. FIG. 15 is a diagram illustrating a relationship between a resonance frequency and an operation frequency. As illustrated in FIG. 15, as the excitation inductance $L_m$ decreases, the gain curve sharply rises at the high frequency side. Since the frequency of the operating point approaches the resonance frequency, an effective value of the current flowing through the semiconductor elements (the diodes D1 and D2) on the secondary side decreases, and loss of the semiconductor elements can be reduced.

[Reference Signs List]

1 Power source
2 Transformer (swing choke coil)
2P Primary winding
2S Secondary winding
3 Secondary side circuit
4, 5 Output terminal
10 LLC resonant converter
11, 12 Resonant circuit
11A, 12A Curve
15 Control IC
20, 20A, 20B, 31 to 36 Core
23, 30, 40 Magnetic leg
26 Gap
27 Saturable portion
50 Bobbin
C1, C2, C3 Capacitor
D1, D2 Diode
L1, L2 Inductor
N1, N2, N3 Connection point
Q1, Q2, Q3, Q4 Semiconductor switch

Claims

1. An LLC resonant converter (10), comprising:

a first switch (Q1) and a second switch (Q2) connected in series between a positive electrode and a negative electrode of a power source (1), a transformer (2) including a primary winding (2P) having a first end connected to the first switch (Q1) and the second switch (Q2), a core (20, 20A, 20B, 31, 32, 33, 34, 35, 36), and a secondary winding (2S), a first capacitor (C1) connected between the negative electrode of the power source (1) and a second end of the primary winding (2P) of the transformer (2), a second capacitor (C2) and a capacitance switch (Q3, Q4) connected to each other in series and in parallel with the first capacitor (C1), and a secondary side circuit (3) connected to the secondary winding (2S) of the transformer (2), wherein the transformer (2) is a swing choke coil.

2. The LLC resonant converter (10) according to claim 1, wherein a gap (26) is provided in the core (31, 33, 34, 35, 36), and at least one of a pair of opposing magnetic legs (30, 40) with the gap (26) provided therebetween has a cross-sectional area which continuously varies.

3. The LLC resonant converter (10) according to claim 1, wherein a gap (26) is provided in the core (32), and at least one of a pair of opposing magnetic legs (30) with the gap (26) provided therebetween has a cross-sectional area which varies stepwise.

4. The LLC resonant converter (10) according to any one of claims 1 to 3, wherein ON and OFF of the capacitance switch (Q3, Q4) is determined on the basis of an input voltage (Vin) of the LLC resonant converter (10) or a terminal voltage of a control circuit (15) controlling the capacitance switch (Q3, Q4).

FIG. 1A

FIG. 1B

FIG. 2

FIG. 3

FIG. 4

FIG. 5

FIG. 6

GAP SMALL

20A

## FIG. 7A

L | SATURATION | | I

Vin VERSUS L
CHARACTERISTIC

Vin VERSUS I
CHARACTERISTIC

Vin_min | Vin

## FIG. 7B

GAP LARGE

20B

## FIG. 7C

L | | I

Vin VERSUS I
CHARACTERISTIC

Vin VERSUS L
CHARACTERISTIC

Vin_min | Vin

## FIG. 7D

20

23
a
26
b
27

# FIG. 8

EXCITATION INDUCTANCE
$L_m [\mu H]$

$I_g = a$

$I_g = b$

$I_g$: GAP LENGTH

EXCITATION
CURRENT
PEEK $I_{mpk}[A]$

AT THE TIME OF
HIGH FREQUENCY

AT THE TIME OF
LOW FREQUENCY

# FIG. 9

FIG. 10

FIG. 11

FIG. 12A

FIG. 12B

FIG. 12C

FIG. 12D

FIG. 13A

FIG. 13B

FIG. 13C

FIG. 13D

FIG. 14

FIG. 15

Europäisches
Patentamt

European
Patent Office

Office européen
des brevets

# EUROPEAN SEARCH REPORT

**Application Number**

EP 18 15 6160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/124487 A1 (FU DIANBO [US] ET AL) 7 May 2015 (2015-05-07) * paragraphs [0006] - [0012], [0028] - [0038], [0042] - [0055]; figures 1,2 * | 1-4 | INV. H02M3/335 H01F3/14 |
| A | US 2014/185330 A1 (HUANG WEN-NAN [TW] ET AL) 3 July 2014 (2014-07-03) * paragraphs [0023], [0024]; figures 4,5,6 * | 1-4 | ADD. H02M1/00 H02M7/48 |
| A | WO 2015/070047 A2 (ROMPOWER ENERGY SYSTEMS INC [US]) 14 May 2015 (2015-05-14) * figures 4A-4D * | 1-4 | |
| A | US 2010/321958 A1 (BRINLEE ANTONY [US] ET AL) 23 December 2010 (2010-12-23) * paragraphs [0007] - [0009], [0020], [0040], [0050] - [0056]; figures 9,10 * | 1-4 | |

TECHNICAL FIELDS
SEARCHED     (IPC)

H02M
H01F

The present search report has been drawn up for all claims

| Place of search | Date of completion of the search | Examiner |
|---|---|---|
| The Hague | 3 August 2018 | Zeljkovic, Sandra |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 15 6160

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2018

| Patent document cited in search report | Publication date | Patent family member(s) | Publication date |
|---|---|---|---|
| US 2015124487 A1 | 07-05-2015 | US 2015124487 A1<br>WO 2015062554 A1 | 07-05-2015<br>07-05-2015 |
| US 2014185330 A1 | 03-07-2014 | NONE | |
| WO 2015070047 A2 | 14-05-2015 | US 2015256087 A1<br>WO 2015070047 A2 | 10-09-2015<br>14-05-2015 |
| US 2010321958 A1 | 23-12-2010 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009514495 PCT
- JP 2014003764 A